# EUROPÄISCHE PATENTSCHRIFT

(11) **EP 0 966 768 B1**
(45) Veröffentlichungstag und Bekanntmachung des Hinweises auf die Patenterteilung: **19.12.2001**
(21) Anmeldenummer: 98908112.0
(22) Anmeldetag: 25.02.1998
(51) Int. Cl.: H01M 4/24, H01M 2/18, H01M 4/02

(54) **WIEDERAUFLADBARE BATTERIEANORDNUNG UND DEREN VERWENDUNG**
RECHARGEABLE BATTERY SYSTEM, AND USE OF SAME
SYSTEME DE BATTERIE RECHARGEABLE ET UTILISATION

(30) Priorität: 28.02.1997 DE 19708209
(43) Veröffentlichungstag der Anmeldung: 29.12.1999
(73) Patentinhaber: ZOXY Energy Systems AG, 09633 Halsbrücke (DE); EnBW Energie Baden-Württemberg AG, 76131 Karlsruhe (DE); Stadtwerke Karlsruhe GmbH, 76127 Karlsruhe (DE)
(72) Erfinder: Pauling, Hans Jürgen, 75038 Oberderdingen (DE)
(74) Vertreter: Heim, Hans-Karl, Dipl.-Ing.
(86) Internationale Anmeldenummer: EP9801072
(87) Internationale Veröffentlichungsnummer: WO9838686

(56) Entgegenhaltungen:
- EP-A- 0 091 238
- US-A- 3 892 594
- US-A- 4 292 357

## Beschreibung

Die Erfindung betrifft eine wiederaufladbare Batterieanordnung gemäß dem Oberbegriff des Anspruch 1.

Batterien und Batterieanordnungen werden in zunehmendem Maße zur primären und sekundären Energieversorgung wichtig. Diese steigende Relevanz liegt nicht zuletzt in den immer stärker werdenden Anforderungen in bezug auf Umweltverträglichkeit der Energieversorgungssysteme im Sinne von Emissionsschutz und Wiederverwendbarkeit oder Wiederverwertbarkeit von Rohstoffen und von Energie.

Dies betrifft zum einen die Endverbraucher und somit die privaten Haushalte, zum anderen aber werden auch öffentliche Einrichtungen und dort insbesondere der Bereich Infrastruktur und Verkehr mit umweltverträglicheren Energiequellen ausgerüstet. Bereits heute werden sowohl mobile Einrichtungen wie z.B. tragbare Kleinstgeräte aber auch Fahrzeuge, insbesondere Straßenfahrzeuge oder auch Schienen- oder Wasserfahrzeuge, mit umweltfreundlichen und wiederverwertbaren oder wiederaufladbaren Energieträgern in Form von Akkumulatoren oder Batterien ausgerüstet. Des weiteren finden derartige Energieträger in Form von Batterieanordnungen oder Batteriesystemen auch in immobilen Einrichtungen, wie z.B. Stand-Alone-Geräten oder auch als Notstromquellen immer größere Anwendung.

Im Bereich des privaten Endkunden aber auch bei öffentlichen Einrichtungen werden vermehrt insbesondere Metall/Luftsauerstoff-Batterien als wiederaufladbare Primärbatterien z.B. bei Hörgeräten oder Herzschrittmachern bzw. in der Nachrichtentechnik und bei Signalanlagen verwendet.

Derartige Metall/Luftsauerstoff-Batterien eignen sich insbesondere aufgrund ihrer hohen Energiedichte sowie ihrer kostengünstigen und umweltverträglichen Aktivmaterialien als dezentrale und wiederaufladbare Stromquellen. Dabei bietet sich insbesondere die Verwendung von Zink als Material für eine Metallelektrode an. Dies folgt aus der niedrigen Äquivalenzmasse und der hohen Wasserstoffüberspannung von Zink, welche eine spontane Auflösung der Zn-Elektrode in einem wässrigen und insbesondere alkalischen Elektrolyten vermindert und gleichzeitig das Wiederaufladen mit einer hohen Stromausbeute ermöglicht.

Bei wiederaufladbaren Akkumulatoren oder Batterieanordnungen ist die Problematik bekannt, daß sich beim Wiederaufladen Struktur- und Gestaltsänderungen an den Metallelektroden bzw. an den elektrochemisch aktiven Schichten einstellen. Diese Problematik ist auch insbesondere bei Zink/Luftsauerstoff-Batterien beobachtet worden. Die Formänderung (shape change) der Metallelektrode mit zunehmender Anzahl von Wiederaufladezyklen führt unter Umständen sekundär zu inneren Kurzschlüssen der Elektrode oder zu Passivierungserscheinungen. Als Folge davon vermindert sich mit fortschreitender Anzahl von Wiederaufladezyklen die Elektrodenkapazität, womit die Lebensdauer der Batterie oder der Batterieanordnung drastisch verringert wird.

Im Stand der Technik sind verschiedene Methoden entwickelt worden, um die schädigenden Einflüsse der Struktur- und Gestaltsänderung der Metallelektrode bzw. der elektrochemisch aktiven Schichten oder die Gestaltsänderung selbst zu vermindern.

Zum Beispiel ist es bekannt, daß man das Wiederaufladen der Elektroden extern durchführt und bei einer entladenen Batterie durch einen mechanischen Austausch der verbrauchten Elektroden durch neue diese Batterie quasi von Grund auf erneuert.

Dies ermöglicht zwar, daß eine entladene Batterie nach "Wiederaufladung" mit einer neuen Elektrode wieder die ursprüngliche Batteriekapazität aufweist, aber ein schnelles und flexibles elektrisches Wiederaufladen durch den Kunden vor Ort ist damit praktisch unmöglich. Es muß somit durch den Hersteller und Vertreiber derartiger Batterieanordnungen aus dem Stand der Technik gleichzeitig ein Service zur Wiederaufbereitung der entladenen Elektroden angeboten werden.

Im Stand der Technik sind des weiteren sogenannte Kassettensysteme zur Aufnahme von Elektrodenanordnungen mit einer an sich mechanisch instabilen gelartigen oder pulvrigen elektrochemisch aktiven Schicht bekannt, die die entsprechenden Elektrodenanordnungen umgeben und die Schicht mechanisch stabilisieren sollen. Diese mechanische Stabilisierung bezieht sich aber auf das Elektrodenmaterial als solches, wenn es sich z.B. um ein Gel oder um ein Pulver handelt, und soll die Handhabung der Elektrodenanordnung beim Wechsel und beim Einbau erleichtern. Die Struktur- und Formänderung der Elektroden beim Wiederaufladen findet aber auf der mikroskopischen und mesoskopischen Größenskala statt und wird bei bekannten Kassettensystemen nicht verhindert.

Ferner sind im Stand der Technik sogenannte feinporige Separatoren bekannt, welche im wesentlichen im Kontakt mit der Elektrode stehen und bei einigen Elektrodentypen denjenigen Anteil der Struktur- und Gestaltsänderung an den Elektroden beim Wiederaufladen vermindert, der durch die sogenannte Elektroosmose verursacht wird. Diese Vorgehensweise ist bei im wesentlichen löslichen Elektroden erster Art möglich.

Bei diesen kann durch den erwähnten feinporigen Separator die Ausbildung elektroosmotisch getriebener Konvektionsströme und damit die Entstehung bestimmter Konzentrationsgradienten reduziert werden, wodurch sich auch eine Reduktion der Struktur- und Gestaltsänderung der Elektrodenanordnung beim zyklischen Wiederaufladen ergeben kann.

Aus der US-PS 3,892,594 ist ein Verfahren zur Herstellung einer von einem semipermeablen Separator eingeschlossenen Elektrode erster oder zweiter Art bekannt. Die direkt auf dem Elektrodenmaterial erzeugten Separatoren sind einerseits für die zur Stromleitung beitragenden Ionen durchlässig, halten aber andererseits die speziellen beim Auf- und Entladen reversibel gebildeten ionischen Verbindungen im Bereich der Elektrode zurück. Metallabscheidungen und Dendritenwachstum sowie das damit verbundene Auftreten von elektrischen Kurzschlüssen oder Kapazitätsverlusten sollen reduziert werden.

In der US-PS 4,292,357 ist eine Anodenanordnung beschrieben, bei welcher zur Verringerung von Formänderungen das Anodenmaterial von einem Separator umgeben ist, wobei der Separator aus einem elektrisch isolierenden und für den Elektrolyten durchlässigen Material besteht.

Aus der EP 0 091 238 A1 ist eine Elektrode zweiter Art bekannt, bei welcher eine Gitterstruktur in das Elektrodenmaterial hineingedrückt wird. Durch die auf diese Weise entstehende Vielzahl getrennter Bereiche sollen Formveränderungen der Elektroden beim Auf- und Entladen von Elektroden vermindert werden.

Bei diesen bekannten Maßnahmen und Anordnungen aus dem Stand der Technik ist ein wesentlicher Anteil der Struktur- und Gestaltsänderung der Elektrodenanordnung beim zyklischen Wiederaufladen nicht behandelbar, so daß dem Benutzer einer wiederaufladbaren Batterieanordnung eine nur sehr begrenzte Anzahl von Wiederaufladezyklen verbleibt, bis die Batterieanordnung und insbesondere die dort enthaltenen Elektroden einer Grunderneuerung unterzogen werden müssen, wodurch nicht unerhebliche Kosten entstehen.

Der Erfindung liegt die **Aufgabe** zugrunde, eine Batterieanordnung zu schaffen, welche dem Benutzer in praktikabler Art und Weise ein besonders kostengünstiges elektrisches Wiederaufladen der Batterieanordnung ermöglicht.

Die Aufgabe wird erfindungsgemäß durch eine wiederaufladbare Batterieanordnung gemäß dem Anspruch 1 gelöst. Vorteilhafte Weiterbildungen der erfindungsgemäßen wiederaufladbaren Batterieanordnung sind Gegenstand der Unteransprüche. Die erfindungsgemäße Verwendung der wiederaufladbaren Batterieanordnungen ist Gegenstand des Anspruchs 15.

Die erfindungsgemäße wiederaufladbare Batterieanordnung weist eine Mehrzahl von Elektroden auf, welche in einem Elektrolytraum angeordnet sind, der seinerseits mit einem Elektrolyten gefüllt ist. Die Mehrzahl von Elektroden wird mit Hilfe eines elektrischen Abgriffes abgegriffen. Mindestens eine der Elektroden ist als im wesentlichen unlösliche Elektrode zweiter Art ausgebildet. Diese im wesentlichen unlösliche Elektrode zweiter Art weist eine Separatoranordnung auf, welche die Elektrode umschließt und mit mindestens einem feinporigen Separator und mindestens einem großporigen Separator versehen ist. Dadurch werden Struktur- und/oder Gestaltsänderung der Elektrode beim zyklischen Auf- und Entladen reduziert, welche im Zusammenhang mit dem Absinken instabiler Entladeprodukte stehen.

Obwohl im Stand der Technik bereits feinporige Separatoren eingesetzt werden, um die auf elektroosmotisch getriebene Konvektionsströme zurückführbare Struktur- und Gestaltsänderung zu reduzieren, liefert diese Vorgehensweise bei im wesentlichen unlöslichen Elektroden zweiter Art keine befriedigenden Ergebnisse. Dies liegt unter anderem daran, daß bei den unlöslichen Elektroden zweiter Art die Struktur- und/oder Gestaltsänderung unter Umständen eben gerade nicht oder nicht maßgeblich durch Konzentrationsgradienten getriebene Elektroosmose verursacht wird, sondern in der Tat auch auf die Schwerkraft in bezug auf unlösliche und insbesondere mechanisch instabile Entladeprodukte, insbesondere aus der Elektrodenoberfläche, und auf deren Absinken zurückzuführen ist.

Bei der erfindungsgemäßen Separatoranordnung aus mindestens einem feinporigen Separator und mindestens einem großporigen Separator übernimmt der großporige Separator die Aufgabe, das Absinken mechanisch instabiler Entladeprodukte zu verhindern. Der feinporige Separator bietet darüber hinaus die Möglichkeit, die im Zusammenhang mit der gradientengetriebenen Elektroosmose stehende Struktur- und/oder Gestaltsänderung der Elektrode zu reduzieren, so daß insgesamt sowohl die elektroosmotisch getriebene wie auch die von der Schwerkraft getriebene Struktur- und/oder Gestaltsänderung der Elektrode vermindert werden kann und sich mit einer derartigen Anordnung eine weitere Erhöhung der Wiederaufladezyklenzahl bis zur nächsten Grunderneuerung der Elektrodenanordnung erreichen läßt.

Zur Reduktion zumindest der mit dem Absinken mechanisch instabiler Entladeprodukte im Zusammenhang stehenden Struktur- und/oder Gestaltsänderung der Elektrode ist es vorteilhaft, zumindest an der im wesentlichen unlöslichen Elektrode zweiter Art eine mit einem Oberflächenprofil oder -relief mit einer Mehrzahl von Vertiefungen und/oder Erhöhungen versehene elektrochemisch aktive Schicht vorzusehen.

Durch das Oberflächenprofil oder das -relief wird die elektrochemisch aktive Schicht der Elektrode, mithin also die Elektrodenoberfläche, durch die entsprechend ausgebildeten Vertiefungen und/oder Erhöhungen quasi in Form einer Art Parkettierung in voneinander getrennte Segmente, Blöcke oder Inseln unterteilt. Durch diese Unterteilung kann bei etwa gleichbleibenden Haftungskräften nur die jeweils in einem Segment oder Block über die dort jeweils auftretenden Entladeprodukte entstehende, lokale Gewichtskraft wirksam werden. Durch eine entsprechende Dimensionierung der Profil- oder Reliefstruktur, d.h. durch eine entsprechende Größenverteilung der Flächensegmente, kann gerade erreicht werden, daß die im wesentlichen unlöslichen, insbesondere mechanisch instabilen Entladeprodukte, in den jeweiligen Segmenten von der sich im Segment aufsummierenden Schwerkraft der Entladeprodukte nicht oder nur vermindert abgelöst werden, wodurch dann die großräumige Struktur- und/oder Gestaltsänderung der Elektrode stark unterdrückt wird. Es kann dann höchstens zu kleinen, lokalen Struktur- und/oder Gestaltsänderungen der Elektrodenoberfläche, eben gerade auf der durch die Segmentgröße gegebenen Größenskala kommen, die aber durch eine entsprechende Dimensionierung der Parkettierung für die Funktionsweise der Batterieanordnung im Hinblick auf eine möglichst hohe Zyklenzahl nicht nachteilig ist.

Das Absinken im wesentlichen unlöslicher und insbesondere mechanisch instabiler Entladeprodukte wird bei der erfindungsgemäßen wiederaufladbaren Batterieanordnung gerade verhindert, so daß durch Unterdrücken des Einflusses der treibenden Kraft, insbesondere der Schwerkraft, die Struktur- und/oder Gestaltsänderung der Elektroden beim zyklischen Auf- und Entladen effektiv reduziert werden kann, so daß eine größere Anzahl von Wiederaufladezyklen möglich ist, bevor die Batterieanordnung und insbesondere die darin enthaltenen Elektroden einer Grunderneuerung unterzogen werden müssen.

Wenn zusätzlich zur Separatoranordnung zumindest die im wesentlichen unlösliche Elektrode zweiter Art eine mit einem Oberflächenprofil oder -relief mit einer Mehrzahl von Vertiefungen und/oder Erhöhungen versehene elektrochemisch aktive Schicht aufweist, kann durch diese mit einem entsprechenden Oberflächenprofil oder -relief versehene elektrochemisch aktive Schicht in vorteilhafter Weise zumindest die mit dem Absinken mechanisch instabiler Entladeprodukte in Zusammenhang stehende Struktur- und/oder Gestaltsänderung der Elektrode beim zyklischen Auf- und Entladen weiter reduziert werden.

Es ist also von Vorteil, eine Kombination aus Separatoranordnung und entsprechendem Oberflächenprofil der elektrochemisch aktiven Schicht der Elektrode vorzusehen, weil sich dann die beiden Wirkmechanismen zur Unterdrückung des Absinkens unlöslicher und insbesondere mechanisch instabiler Entladeprodukte in einer Art synergetischem Effekt verstärken. Es bleibt aber festzuhalten, daß das Ausbilden der Separatoranordnung und das Vorsehen einer entsprechenden Elektrodenoberfläche mit Relief voneinander unabhängige, gleichwohl miteinander kombinierbare Vorgehensweise zur erfindungsgemäßen Lösung der in Rede stehenden Aufgabe sind.

Obwohl die Unterdrückung des Absinkens unlöslicher und insbesondere mechanisch instabiler Entladeprodukte sowie die Verminderung der Gestalts- und/oder Volumenänderung ein generelles Prinzip darstellt, läßt sich der Effekt besonders auf während der Batteriebenutzung oder Entladung als Anode und während der Regeneration oder Wiederaufladung als Kathode geschaltete, im wesentlichen unlösliche Elektroden zweiter Art und insbesondere auf Metallelektroden anwenden, wobei eine Zinkelektrode aufgrund ihrer besonders hohen Energiedichte zu bevorzugen ist.

Es ist von besonderem Vorteil, daß der feinporige Separator zum Unterdrücken des Austritts von Entladeprodukten der Elektrode, welche insbesondere im wesentlichen löslich sein können, aus der Separatoranordnung hinaus ausgebildet ist. Ferner ergibt sich eine besonders vorteilhafte Batterieanordnung, wenn der feinporige Separator zum Unterdrücken des Ausbildens interner Kurzschlüsse, insbesondere durch die Ausbildung von Dendriten während des elektrischen Wiederaufladens, geschaffen ist.

Der großporige Separator wird bevorzugt zum festen Umschließen der Elektrode ausgebildet, weil sich dann eine besonders einfache Handhabung der umschlossenen Elektrodenanordnung ergibt und darüber hinaus gegenüber der Grenzfläche Elektrode/Separator wenig Spielraum für eine Formänderung und/oder Volumenänderung der Elektrodenoberfläche verbleibt.

Um die Handhabung der umschlossenen Elektrode weiter zu vereinfachen, weist der großporige Separator vorteilhafter-weise eine erhöhte mechanische Stabilität auf. Dadurch kann insbesondere auch einer Volumenzunahme und/oder Formänderung der Elektrode während des Ent- und/oder Aufladens der Batterieanordnung entgegengewirkt werden.

Der feinporige Separator kann als erster, innerer Separator ausgebildet sein, der vom großporigen Separator als zweiter, äußerer Separator umgeben ist. Denkbar ist aber auch jede andere Ausführungsform.

Zur besonders effektiven Verminderung des Absinkprozesses der im wesentlichen unlöslichen und insbesondere mechanisch instabilen Entladeprodukte weist ein bevorzugter großporiger Separator eine Vielzahl von Poren, Öffnungen oder Kammern auf, die zum Zu- und/oder Abführen des Elektrolyten zu der bzw. von der Elektrode dienen. Dabei weisen diese Poren, Öffnungen oder Kammern, insbesondere in bezug auf ihren Querschnitt, im wesentlichen die gleiche Gestalt auf. Sie sind vorteilhafter-Weise in etwa homogen auf dem gesamten Separator bzw. auf dessen Oberfläche verteilt angeordnet, um eine möglichst gleichmäßige Benetzung der Elektrodenoberfläche mit Elektrolyten und somit einen besonders gleichmäßigen Ab- bzw. Aufbau der Elektrode beim zyklischen Ent- bzw. Aufladen zu gewährleisten.

Die Verteilung der Poren, Öffnungen oder Kanäle ist besonders dann in etwa homogen auf der Separatoroberfläche, wenn diese wabenartig auf dem Separator angeordnet sind und insbesondere einen kreisrunden, rechteckigen oder sechseckigen Querschnitt aufweisen.

Um den besonderen Beanspruchungen in der Batterieanordnung gerecht zu werden, bestehen die Separatoranordnung und insbesondere der großporige Separator aus einem elektrisch nichtleitenden Material. Es ist dabei von Vorteil, wenn die Separatoranordnung im wesentlichen chemisch inert ausgebildet ist. In bezug auf diese extremen Anforderungen ist die Separatoranordnung insbesondere inert gegenüber Sauerstoff, konzentrierten Laugen, insbesondere KOH, und/oder Säuren ausgebildet. Darüber hinaus ist Inertheit gegen Elektrolytzusätze oder -additive, wie z.B. Pb, Hg, Cd, Ca, Sn und/oder andere, vorgesehen.

Da bei den verschiedenen Auf- und Entladeprozessen und auch unter den unterschiedlichsten Betriebsbedingungen starke Temperaturschwankungen innerhalb der Batterieanordnung auftreten können, ist es vorgesehen, daß die Separatoranordnung, insbesondere der großporige Separator, im Bereich der Betriebstemperaturen, insbesondere von etwa -60 C bis etwa +70° C, chemisch stabil ausgebildet ist. Darüber hinaus ist es von Vorteil, wenn in diesem Bereich der Betriebstemperaturen die Separatoranordnung und insbesondere der großporige Separator einen im wesentlichen kleinen Wärmeausdehnungskoeffizienten aufweisen, weil dann gewährleistet ist, daß der Elektrodenoberfläche z.B. kein Raum für eine Volumenausdehnung gegeben wird.
Der Bereich der Betriebstemperaturen ist generell der Temperaturbereich, in welchem die Batterie noch sinnvoll ent- und geladen werden kann, und wird nach oben hin durch den Siedepunkt des Elektrolyten begrenzt.

Die erfindungsgemäße wiederaufladbare Batterieanordnung wird vorzugsweise als eine oder in einer wiederaufladbaren Metall/Luftsauerstoff-Batterie und insbesondere in einer Zink/Luftsauerstoff-Batterie verwendet.

Der feinporige Separator kann prinzipiell aus Polyethylen, Polyproylen oder aus Polyolefinen hergestellt sein. Die Verwendung gepfropfter Versionen dieser Materialien erhöht die Benetzbarkeit durch den Elektrolyten. Zur Verhinderung der Dendritenbildung beim Wiederaufladen ist die mechanische Stabilität des feinporigen Separators von besonderer Bedeutung.

Ferner sollte beim feinporigen Separator eine möglichst kleine Porengröße bei ausreichender Durchlässigkeit für OH⁻ -Ionen gewährleistet sein.

Besonders gute Ergebnisse werden mit Polyethylenmaterialien mit besonders großen molekularen Massen, nämlich sogenannten PE-UHMW, erzielt. Hierbei zeigen diese Materialien eine besonders gute Widerstandsfähigkeit gegen Chemikalien und ein gutes elektrisches Isoliervermögen. Die durchschnittliche Porengröße bei diesem Material liegt bei etwa 0,1 µm. Der größte Porendurchmesser beträgt 1 µm. Die Porosität beträgt in diesem Fall ca. 40 %.

Die Poren der Separatoren können auch vorteilhafter Weise gefüllt sein, um das Austreten instabiler Entladeprodukte aus dem Separatorraum zu verhindern. Als geeignete Füllmaterialien eignen sich insbesondere Salze, welche in Laugen zwar unlöslich aber für OH⁻ -Ionen durchlässig sind. Als Beispiel sei hier TiO₂ genannt. Es sind aber auch Hydroxyde oder bestimmte Oxyde, wie z.B. MgO oder CaO, insbesondere wegen ihrer hohen Durchlässigkeit für OH⁻ Ionen, geeignet.

Die gegebenenfalls auf die Elektrodenoberfläche aufgebrachte Reliefstruktur oder Profilstruktur kann im Prinzip beliebig ausgestaltet sein. In der Regel ist eine wabenartige Struktur vorgesehen, bei der die einzelnen erhobenen Inselbereiche durch grabenartige Vertiefungen voneinander getrennt sind. Es ist insbesondere an eine im wesentlichen gleichmäßige und homogene Verteilung der Inseln oder Segmente mit Trennung durch gleichartige Vertiefungen in Form von Gräben gedacht.

Dabei können die einzelnen Inseln oder Segmente oder erhobenen Bereiche voneinander berührungsfrei durch entsprechende Gräben angeordnet sein, wobei ein elektrischer Kontakt höchstens über den sogenannten Elektrodenträger hergestellt wird. Die räumliche Trennung oder Separation durch den entsprechenden Graben kann auch durch isolierende Verstrebungen, insbesondere im Bereich des großporigen Separators, unterstützt werden. Die Struktur der Inseln oder Segmente kann rechteckig, insbesondere quadratisch, kreisförmig oder jede beliebige andere Form aufweisen. Es können auch Streifenbereiche, insbesondere paralleler Art, vorgesehen sein, die durch entsprechende streifenartige parallel angeordnete Gräben voneinander getrennt sind.

Vorteilhafterweise wird die beschriebene erfindungsgemäße Batterieanordnung mit einem insbesondere alkalischen wässrigen Elektrolyten mit einer Konzentration zwischen etwa 3 bis etwa 10 mol/l, vorzugsweise im Bereich von etwa 6 mol/l, eingesetzt.

Zur Verbesserung bestimmter Eigenschaften, wie z.B. der Korrosionsstabilität, dem Entladeverhalten oder anderen, kann der Elektrode der Batterieanordnung jeweils ein Metall als Additiv zugesetzt werden. Dabei werden Metalle verwendet, die im alkalischen Bereich anodisch oxidierbar sind. Dies sind beispielsweise Hg, Cd, Ca, Sn, Pb oder andere.

Insbesondere wird Blei (Pb) in einer Konzentration von etwa 0,1 bis etwa 5 Gew.-% zugesetzt. Beim Neuaufbau einer entsprechenden Elektrode, d.h. der Grunderneuerung, beträgt die Konzentration an Blei im Elektrolyten zwischen etwa 0,1 bis etwa 2 Gew.-%. Besonders günstige Verhältnisse stellen sich mit 1 Gew.-% im Elektrodenmaterial und mit ca. 0,2 Gew.-% beim Neuaufbau der Elektrode im Elektrolyten ein.

Bei der elektrochemischen Regeneration muß das an der zu regenerierenden Elektrode abzuscheidende Metall im Elektrolyten innerhalb bestimmter Bereiche eingeregelt werden. Hier werden z.B. bei Zink-Elektroden insbesondere Konzentrationen von etwa 1 bis 100 g/l gewählt, wobei eine Konzentration von 20 g/l vorzuziehen ist.

Nachfolgend wird die Erfindung in einer schematischen Zeichnung anhand bevorzugter Ausführungsbeispiele näher erläutert. In dieser ist
- Fig. 1: eine schematische und geschnittene Seitenansicht eines Ausführungsbeispiels der erfindungsgemäßen wiederaufladbaren Batterieanordnung,
- Fig. 2: eine perspektivische und teilweise geschnittene Seitenansicht einer Elektrode der erfindungsgemäßen Batterieanordnung aus Fig. 1,
- Fig. 3A, 3B und 3C: schematische Seitenansichten verschiedener Ausführungsbeispiele für einen Separator der erfindungsgemäßen Batterieanordnung aus Fig. 1,
- Fig. 4A: eine perspektivische und teilweise geschnittene Seitenansicht einer Elektrode eines anderen Ausführungsbeispiels der erfindungsgemäßen Batterieanordnung,
- Fig. 4B: eine Draufsicht auf einen Schnitt der in Fig. 4A gezeigten Elektrode entlang der Ebene Z,
- Fig. 5A: eine Seitenansicht einer Elektrode eines anderen Ausführungsbeispiels der erfindungsgemäßen Batterieanordnung,
- Fig. 5B: eine Draufsicht auf einen Schnitt durch die Elektrode aus Fig. 5A in bezug auf die Ebene X,
- Fig. 6A: eine Draufsicht auf das Oberflächenprofil oder -relief einer Elektrode der erfindungsgemäßen Vorrichtung, und
- Fig. 6B: eine Querschnittsansicht des Oberflächenprofils oder des -reliefs einer Elektrode der erfindungsgemäßen Batterieanordnung.

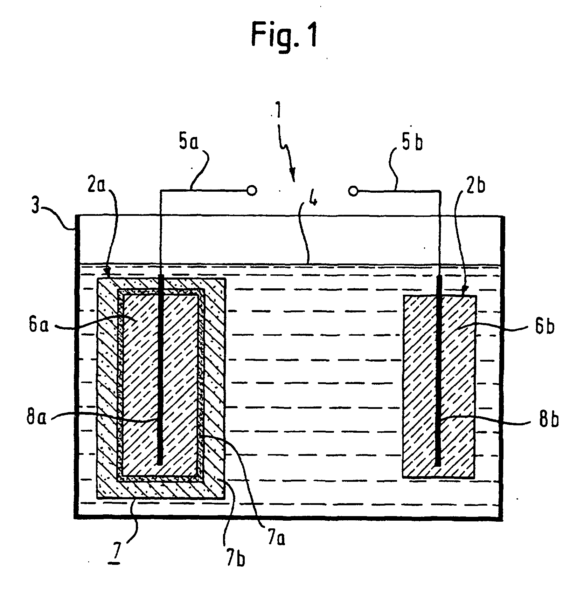

Die Fig. 1 zeigt eine schematische und teilweise geschnittene Seitenansicht auf ein Ausführungsbeispiel der erfindungsgemäßen wiederaufladbaren Batterieanordnung.

Allgemein wird diese Batterieanordnung 1 von einem Elektrolytraum 3 im wesentlichen umgeben und umschlossen. Der Elektrolytraum 3 ist mit einem Elektrolyten 4 gefüllt. Der Elektrolytraum 3 selbst kann als vollständig abgeschlossener Behälter oder auch in teilweise offener Bauweise ausgebildet sein. In dem Elektrolytraum 3 sind in dem Ausführungsbeispiel zwei Elektroden 2a und 2b aufgenommen, und zwar derart, daß sie vom Elektrolyten 4 im wesentlichen vollständig benetzt sind.

Die Elektroden 2a und 2b werden hier in ihrem Kern von einem Elektrodenträger 8a bzw. 8b gebildet, welcher jeweils mit einer elektrochemisch aktiven Schicht 6a bzw. 6b bedeckt ist. Die Elektroden werden durch elektrische Ableitungen oder Abgriffe 5a bzw. 5b abgegriffen, durch welche die elektrische Energie an eine Last oder an einen Verbraucher übertragen werden kann.

Bei dem in Fig. 1 gezeigten Ausführungsbeispiel der erfindungsgemäßen Batterieanordnung 1 ist die in der Figur linke Elektrode 2a als im wesentlichen unlösliche Metallelektrode zweiter Art ausgebildet. Bei dem Träger 8a an dieser Elektrode kann es sich um einen beliebigen elektrisch leitenden Träger handeln. Die elektrochemisch aktive Schicht 6a kann hier z.B. aus Zink bestehen. Die Elektrode 2a ist in diesem Beispiel als Anode geschaltet.

Die Elektrode 2a ist von einer Separatoranordnung 7 umgeben, welche die Elektrode 2a vollständig umschließt. Die Separatoranordnung 7 des Ausführungsbeispiels aus Fig. 1 weist einen inneren, ersten und feinporigen Separator 7a und einen äußeren, zweiten und großporigen Separator 7b auf.

Der innere, erste feinporige Separator 7a dient der Reduzierung bestimmter Konzentrationsgradienten im Elektrolyten 4 in der Umgebung der elektrochemisch aktiven Schicht 6a und damit der Verminderung desjenigen Anteils an Struktur- und/oder Gestaltsänderung der Elektrode 2a beim zyklischen Ent- und Aufladen, welcher auf durch Elektroosmose getriebene Konvektionsströme, insbesondere parallel zur Oberfläche der elektrochemisch aktiven Schicht 6a, zumindest teilweise zurückzuführen ist.
Darüber hinaus kann der feinporige Separator 7a wirksam die Dendritenbildung und damit die Gefahr interner Kurzschlüsse vermindern.

Der äußere, zweite großporige Separator 7b umgibt das Innere, nämlich die eigentliche Elektrode 2a und den inneren Separator 7b, dient der mechanischen Stabilität der gesamten Elektrode 2a und reduziert die Struktur- und/oder Gestaltsänderung, insbesondere die Volumenzunahme, der elektrochemisch aktiven Schicht 6a der Elektrode 2a, indem zum einen die elektrochemisch aktive Schicht 6a fest umgeben wird, so daß eine Volumenänderung nicht möglich ist, und indem zum anderen das Absinken unlöslicher und insbesondere mechanisch instabiler Entladeprodukte, insbesondere aus der elektrochemisch aktiven Schicht 6a, infolge der Schwerkraft verhindert wird.

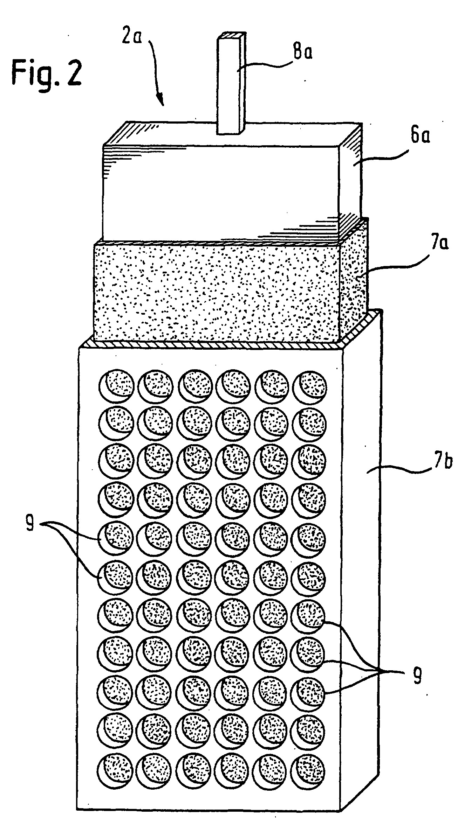

Fig. 2 zeigt in einer perspektivischen, teilweise geschnittenen Seitenansicht die Elektrode 2a des Ausführungsbeispiels aus Fig. 1 in detaillierterer Form.

Der Kern der Elektrode 2a wird auch hier von einem Träger 8a gebildet, welcher seinerseits die elektrochemisch aktive Schicht 6a, z.B. eine Zinkschicht, aufnimmt. Die elektrochemisch aktive Schicht 6a ist in diesem Ausführungsbeispiel von einem inneren, ersten feinporigen Separator 7a umgeben. Nach außen hin wird die gesamte Elektrode 2a durch einen äußeren, zweiten großporigen Separator 7b abgeschlossen. Zum Elektrolytaustausch zwischen dem Äußeren der Elektrode 2a und dem Inneren weist der äußere, zweite großporige Separator 7b eine Mehrzahl von Poren, Öffnungen oder Kanälen 9 auf. Diese Öffnungen 9 sind in dem Ausführungsbeispiel der Fig. 2 von gleichartiger kreisförmiger Gestalt, und sie sind regelmäßig in Form eines Gitters mit nur geringen Zwischenräumen in der Wand des Separators 7b eingebracht.

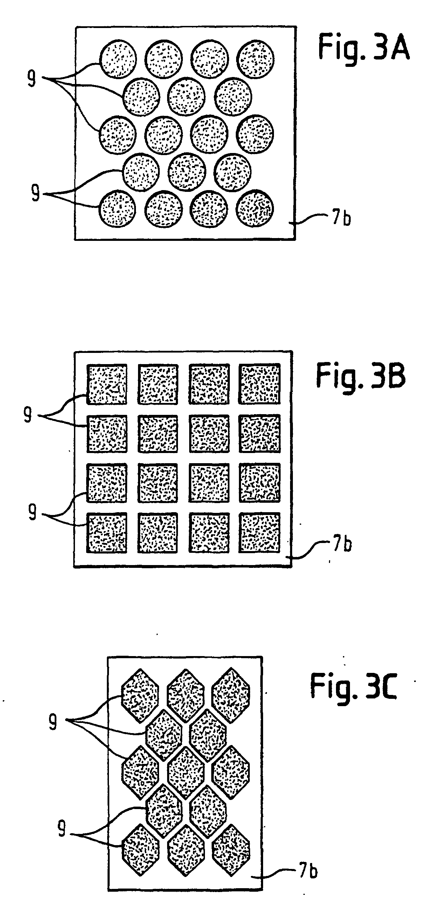

Die Fig. 3A, 3B und 3C zeigen in schematischer Seitenansicht verschiedene Ausführungsbeispiele von großporigen Separatoren 7b. Diese Ausführungsbeispiele unterscheiden sich hier ausschließlich in der Form und in der gegenseitigen Anordnung der in der Separatorwandung eingebrachten Poren, Öffnungen oder Kanäle 9.

Der Separator 7b aus der Fig. 3A weist wie der in Fig. 2 gezeigte gleichartige kreisförmige Poren auf. Im Gegensatz zu dem in Fig. 2 gezeigten Beispiel sind diese Poren gegeneinander auf Lücke versetzt angeordnet.

Die Poren des in Fig. 3B gezeigten Ausführungsbeispiels haben einen rechteckigen, insbesondere quadratischen, Querschnitt, und sie sind, wie bei dem in Fig. 2 gezeigten Ausführungsbeispiel, regelmäßig nach Art eines Gitters in der Separatorwandung eingebracht.

Die Poren 9 des in Fig. 3C gezeigten Separators 7b sind wie bei dem in Fig. 3A gezeigten Ausführungsbeispiel versetzt auf Lücke angeordnet, wobei es sich aber bei den Öffnungen 9 dieses Beispiels um Öffnungen in der Separatorwandung handelt, die einen regelmäßigen, sechseckigen Querschnitt, etwa in Form einer Bienenwabe aufweisen.

Prinzipiell sind jegliche Querschnittsformen für die Poren 9 denkbar. Darüber hinaus kann auch an beliebige Porenanordnungen in der Separatorwandung gedacht werden, so lange nur sichergestellt ist, daß die elektrochemisch aktive Schicht 6a hinreichend stark und genügend gleichmäßig mit Elektrolyten 4 benetzt wird, so daß ein ausreichender und insbesondere auch gleichmäßger elektrochemischer Umsatz möglich ist.

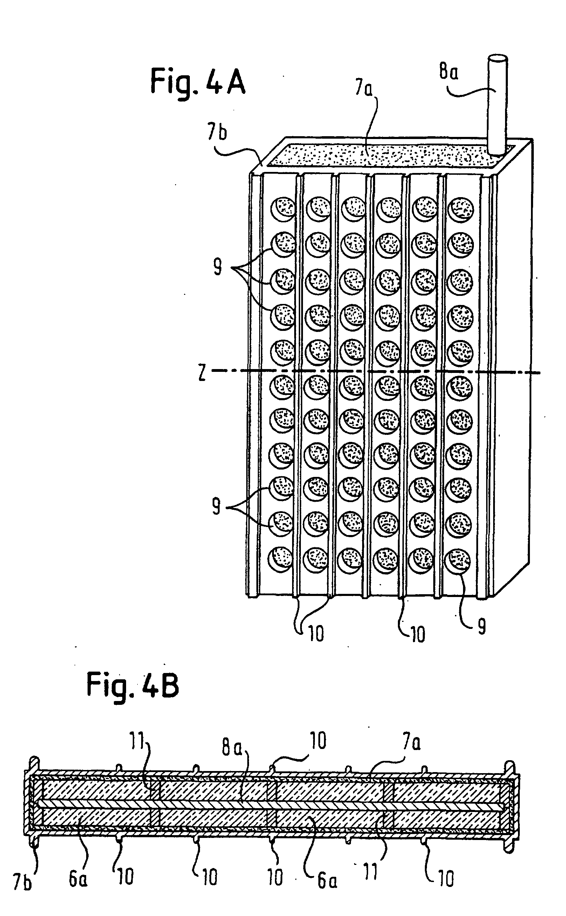

Die Fig. 4A zeigt in perspektivischer Seitenansicht eine sogenannte Kassettenelektrode 2a, bei der der zweite, großporige Separator 7b in Form einer mechanisch verstärkten Kassette ausgebildet ist. Die Poren oder Öffnungen 9 sind bei diesem Ausführungsbeispiel ähnlich wie bei dem in Fig. 2 gezeigten Separator 7b kreisförmig und regelmäßig in Form eines Gitters angeordnet. Die einzelnen Spalten der angeordneten Öffnungen 9 weisen äquidistante Verstärkungskanten 10 auf, die dem großporigen Separator 7b in bezug auf seine Biegesteifigkeit und seine Volumenkonstanz verbessern.

In diesem Ausführungsbeispiel der Fig. 4A ist durch die Öffnungen 9 bzw. durch die Schnittkante im oberen Bereich der innere, erste feinporige Separator 7a sichtbar. Ferner ist auch wieder der Elektrodenkern in Form des Trägers 8a angedeutet.

Die Fig. 4B zeigt die Draufsicht auf einen Schnitt der in Fig. 4A gezeigten Elektrode, und zwar in bezug auf die in Fig. 4A gezeigte Schnittebene Z. Hier ist auch sichtbar, daß die Separatoranordnung 7 mit dem äußeren, großporigen Separator 7b und dem inneren, feinporigen Separator 7a das in der Fig. 4B gezeigte Elektrodenmaterial oder die elektrochemisch aktive Schicht 6a innig umschließt, und somit eine Volumenänderung bzw. eine Struktur- und Gestaltsveränderung dieser Schicht 6a reduziert. Neben den bereits erwähnten Verstärkungskanten 10 können zur weiteren Erhöhung der Stabilität im Inneren des Separators 7, aber insbesondere zur Ausbildung der Segmentierung der elektrochemisch aktiven Schicht 6a, d.h. also zur Ausbildung des Oberflächenprofils oder -reliefs, Stege oder Balken 11 ausgebildet sein, die eine zusätzliche Maßnahme zur Unterdrückung der Volumenzunahme und der Gestaltsänderung elektrochemischen aktiven Schicht 6a darstellen.

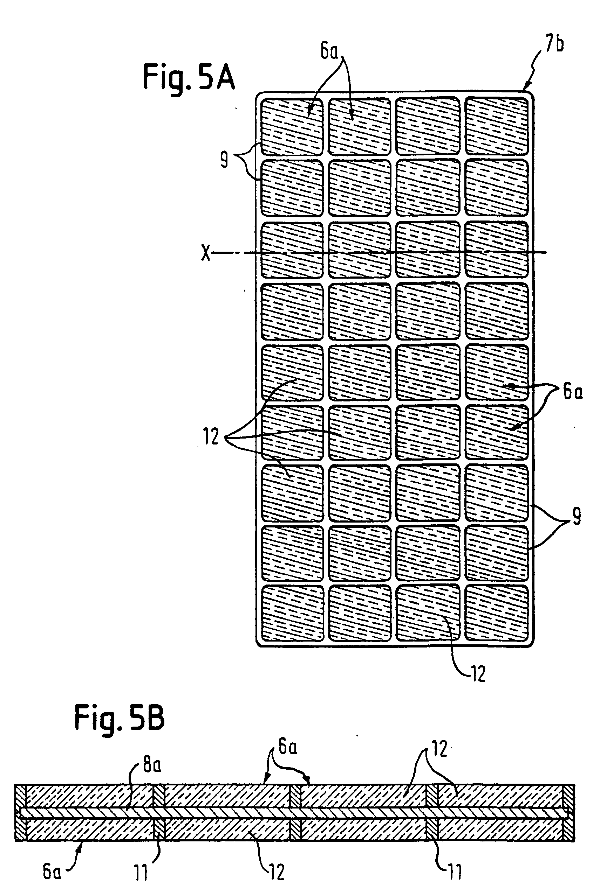

Die Fig. 5A zeigt ein weiteres Beispiel für eine Elektrode 2a mit einer Separatoranordnung 7. Der äußere Separator 7b weist hier quadratisch ausgebildete Öffnungen 9 auf, die in etwa kongruent sind mit den Segmenten oder Waben des Profils oder Reliefs der elektrochemisch aktiven Schicht. Bei diesem Ausführungsbeispiel ist kein innerer, feinporiger Separator 7a vorgesehen. Eine derartige Maßnahme kann z.B. bei im wesentlichen unlöslichen Elektroden abkömmlich sein, insbesondere wenn die Segmentierung der Elektrodenoberfläche zur Verhinderung der Volumen- und Gestaltsänderung ausreichend ist.

In der Fig. 5B ist die Draufsicht auf einen Schnitt durch die Elektrode der Fig. 5A entlang der Schnittebene X dargestellt. Aus dieser Darstellung wird deutlich, daß in der Tat kein feinporiger innerer Separator 7a vorgesehen ist. Ferner ist wieder der Elektrodenkern in Form eines Trägerelements 8a dargestellt. Zur zusätzlichen mechanischen Verstärkung des äußeren Separators 7b und zur Oberflächenparkettierung in Segmente 12 sind Stege 11 vorgesehen.

Die in den Fig. 4A bis 5B gezeigten zusätzlichen Elemente 10, 11 zur Verstärkung der mechanischen Stabilität des äusseren Separators 7b können auch in einer Form ausgebildet sein, so daß die Poren 9 des großporigen Separators 7b zusammen mit den mechanischen Verstärkungsstegen 11 im wesentlichen abgeschlossene Kammern bilden, welche miteinander im wesentlichen nur über den Elektrodenkern 8a in elektrischer Verbindung stehen, ansonsten aber und insbesondere strömungsmäßig voneinander im wesentlichen isoliert sind. Eine derartige Maßnahme, d.h. die Unterteilung der gesamten Elektrodenfläche in eine Vielzahl kleiner Abschnitte, verhindert ebenfalls das Absinken mechanisch instabiler Entladeprodukte und damit auch einen erheblichen Teil der beim zyklischen Ent- und Aufladen auftretenden Struktur- und Gestaltsänderung, insbesondere der elektrochemisch aktiven Schicht 6a.

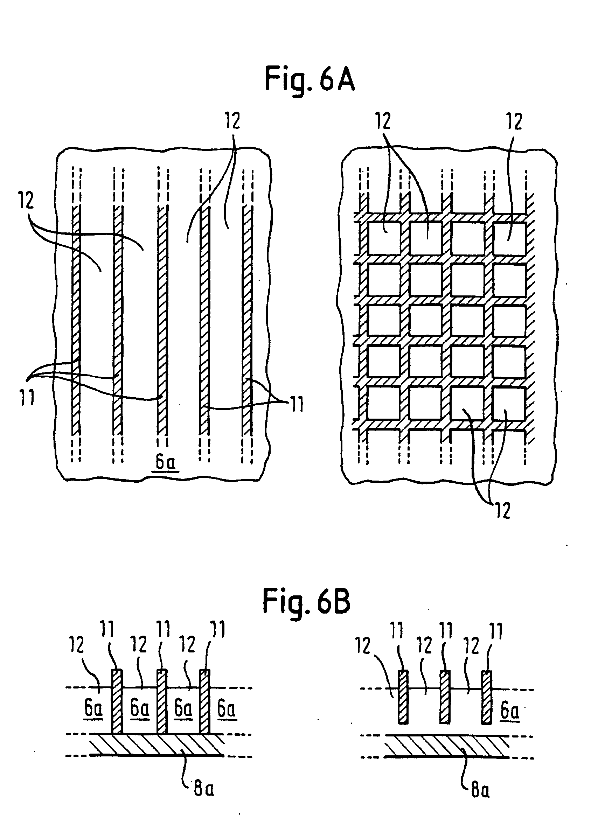

Die Fig. 6A zeigt zwei Draufsichten auf die Oberflächenprofile oder -reliefe einer Elektrode einer erfindungsgemäßen Batterieanordnung. Auf der linken Seite sind die Oberflächensegmente 12 der elektrochemisch aktiven Schicht 6a in Streifen angeordnet und durch Vertiefungen 11, die insbesondere parallel verlaufen, voneinander getrennt. Sowohl die Segmente 12 wie auch die trennenden Vertiefungen 11 können zueinander parallel und in etwa gleichartig angeordnet und dimensioniert sein.

Auf der rechten Seite der Fig. 6A ist die Parkettierung 12 der elektrochemisch aktiven Schicht 6a der Elektrode in Form eines Musters mit Quadratsegmenten 12 gegeben, die gitterförmig angeordnet sind und durch ein entsprechendes Gitter mit Vertiefungen 11 voneinander getrennt sind.

In den Darstellungen der Fig. 6B sind entsprechende Oberflächenprofile oder -reliefe im Querschnitt gezeigt. Die einzelnen Segmente 12 der elektrochemisch aktiven Schicht 6a können entweder voneinander völlig räumlich getrennt sein, wobei die räumliche Trennung durch die Vertiefungen 11 durch entsprechende Querstege sowohl in bezug auf ein mechanische Stabilisierung als auch in bezug auf eine weitestgehende elektrische Isolation noch verstärkt wird.

Auf der rechten Seite der Fig. 6B ist dargestellt, daß die Segmente 12 der elektrochemisch aktiven Schicht 6a an ihrer Grundfläche zumindest noch miteinander in galvanischem Kontakt stehen können, wobei die Vertiefungen 11, die hier der wesentlichen Trennung dienen, auch durch entsprechenden Querstege ausgefüllt sein können.

An die Materialien, aus denen die Separatoranordnung 7 bzw. der zweite, großporige Separator 7b gebildet werden, sind unter Umständen hohe Anforderungen in bezug auf die chemische Inertheit, die mechanische Stabilität und/oder die thermische Stabilität und Ausdehnung zu stellen.

Prinzipiell können sämtliche nichtleitenden Materialien oder Materialkombinationen verwendet werden, welche unter den Bedingungen des Betriebs und des Wiederaufladens im wesentlichen chemisch inert sind.

So bieten sich z. B. organische Kunststoffe, insbesondere organische Polymere wie z. B. Teflon, oder deren Kombination an. Darüber hinaus kann auch an anorganische Materialien wie z. B. anorganische Polymere, gesinterte Materialien, Keramiken oder Gläser gedacht werden.

Darüber hinaus können auch Materialien zum Einsatz kommen, welche entweder den Anforderungen an Inertheit nicht hinreichend genügen oder welche z. B. den elektrischen Strom leiten, so lange diese Materialien nur als Träger für den Seperator verwendet werden und mit einem entsprechenden inerten und elektrisch nicht leitenden Material beschichtet sind.

So kann z. B. an die Verwendung von Metallnetzen oder Metallgittern gedacht werden, welche mit einer Teflonschicht überzogen sind.

Im Sinne der Erfindung wird unter einer unlöslichen Elektrode eine Elektrode verstanden, bei welcher die elektrochemisch aktive Schicht unter den Betriebsbedingungen der Batterieanordnung nicht oder nur schlecht im Elektrolyten lösbar ist und bei der darüber hinaus die gegebenenfalls beim Entladen der Elektrodenanordnung entstehenden Entladeprodukte ebenfalls nicht oder nur schlecht im Elektrolyten lösbar sind.

Eine unlösliche Elektrode nimmt also an den an den Elektrodenanordnungen stattfindenden Oxidations- und Reduktionsprozessen stofflich im wesentlichen nicht teil. Sie fungiert lediglich als Elektronenakzeptor bzw. -donator. Das die elektrochemisch aktive Schicht bildende Material verläßt somit diese Schicht im wesentlichen nicht, kann aber selbst durch entsprechende Oxidations- oder Reduktionsprozesse chemisch zu Entladeprodukten umgestaltet werden.

Von löslichen Elektroden spricht man dagegen, wenn das Elektrodenmaterial ohne wesentliche Hemmung unter Abgabe oder unter Aufnahme von Elektronen in Lösung geht.

Unter einer Elektrode zweiter Art wird im Sinne der Erfindung eine Elektrode verstanden, bei welcher am Auf- bzw. Entladeprozeß an der Elektrode neben dem Material der elektrochemisch aktiven Schicht der Elektrode und gelösten Ionen auch eine schwer lösliche Verbindung des Materials der elektrochemisch aktiven Schicht beteiligt ist. Dies kann bei einer Metallelektrode z. B. ein im Elektrolyten schwer lösliches Salz des betreffenden Metalls sein. Beispiele für Elektroden zweiter Art sind neben der oben bereits erwähnten Zinkelektrode die sogenannte Kalomelelektrode und die Silber/Silberhalogenidelektrode.

Eine Elektrode zweiter Art ist also eine elektrochemische Halbzelle, deren Potential über das Löslichkeitsprodukt eines schwer löslichen Stoffes von der Aktivität einer Ionenart abhängt, welche nicht an der Elektrodenreaktion teilnimmt.

Neben der sogenannten Zink-Elektrode einer Zink-/Luftsauerstoff-Batterie können das erfindungsgemäße Verfahren sowie die erfindungsgemäße Vorrichtung natürlich auch auf Elektroden von Sn/Pb-, Sn/SnO₂-, Ag/Zn-, Ni/Cd-, Ni/Metallhydrid-Akkumulatoren oder -Batterien oder dergleichen angewendet werden.

## Patentansprüche

1. Wiederaufladbare Batterieanordnung
mit einer Mehrzahl von Elektroden (2a, 2b) in einem mit Elektrolyten (4) gefüllten Elektrolytraum (3), welche mit Hilfe eines elektrischen Abgriffes (5a, 5b) abgegriffen werden,
wobei mindestens eine der Elektroden (2a, 2b) als Elektrode (2a) zweiter Art ausgebildet ist und zumindest die Elektrode (2a) zweiter Art eine Separatoranordnung (7) aufweist, welche die Elektrode (2a) umschließt,
**dadurch gekennzeichnet,**
**daß** die Separatoranordnung (7) mindestens einen feinporigen Separator (7a) und mindestens einen großporigen Separator (7b) aufweist.

2. Batterieanordnung nach Anspruch 1,
**dadurch gekennzeichnet,**
**daß** zumindest die Elektrode (2a) zweiter Art zusätzlich eine mit einem Oberflächenprofil oder -relief mit einer Mehrzahl von Vertiefungen und/oder Erhöhungen versehene elektrochemisch aktive Schicht (S) aufweist.

3. Batterieanordnung nach einem der vorhergehenden Ansprüche,
**dadurch gekennzeichnet,**
**daß** die Elektrode (2a) zweiter Art als Anode ausgebildet ist.

4. Batterieanordnung nach einem der vorhergehenden Ansprüche,
**dadurch gekennzeichnet,**
**daß** die Elektrode (2a) zweiter Art als Metallelektrode und insbesondere als Zinkelektrode ausgebildet ist.

5. Batterieanordnung nach einem der vorhergehenden Ansprüche,
**dadurch gekennzeichnet,**
**daß** der feinporige Separator (7a) zum Unterdrücken des Austritts von Entladeprodukten der Elektrode (2a) aus der Separatoranordnung (7) hinaus und/oder des Ausbildens von Kurzschlüssen, insbesondere durch Dendritenbildung während des elektrischen Wiederaufladens, ausgebildet ist.

6. Batterieanordnung nach einem der vorhergehenden Ansprüche,
**dadurch gekennzeichnet,**
**daß** der großporige Separator (7b) zum festen Umschließen der Elektrode (2a) ausgebildet ist.

7. Batterieanordnung nach einem der vorhergehenden Ansprüche,
**dadurch gekennzeichnet,**
**daß** der großporige Separator (7b) eine mechanische Stabilität aufweist, welche insbesondere einer Volumenzunahme der Elektrode (2a) und einer Struktur- und/oder Gestaltsänderung während des Ent- und/oder Aufladens der Batterieanordnung (1) entgegenwirkt.

8. Batterieanordnung nach einem der vorhergehenden Ansprüche,
**dadurch gekennzeichnet,**
**daß** der großporige Separator (7b) eine Vielzahl von Poren, Öffnungen oder Kanälen (9) zum Zu- und/oder Abführen von Elektrolyten (4) zur bzw. von der Elektrode (2a) aufweist.

9. Batterieanordnung nach Anspruch 8,
**dadurch gekennzeichnet,**
**daß** die Poren, Öffnungen oder Kanäle (9) im wesentlichen die gleiche Gestalt aufweisen und in etwa homogen auf dem Separator (7b) verteilt angeordnet sind.

10. Batterieanordnung nach einem der Ansprüche 8 oder 9,
**dadurch gekennzeichnet,**
**daß** die Poren, Öffnungen oder Kanäle (9) wabenartig auf dem Separator (7b) angeordnet sind und insbesondere einen kreisrunden, rechteckigen oder sechseckigen Querschnitt aufweisen.

11. Batterieanordnung nach einem der vorhergehenden Ansprüche,
**dadurch gekennzeichnet,**
**daß** die Separatoranordnung (7) und insbesondere der großporige Separator (7b) aus einem elektrisch nicht leitenden Material ausgebildet sind.

12. Batterieanordnung nach einem der vorhergehenden Ansprüche,
**dadurch gekennzeichnet,**
**daß** die Separatoranordnung (7) chemisch inert gegenüber Sauerstoff, konzentrierten Laugen, insbesondere KOH, Säuren und/oder gegebenenfalls gegen zugesetzte Elektrolytadditive, wie Pb, Hg, Cd, Ca, Sn oder andere, ausgebildet ist.

13. Batterieanordnung nach einem der vorhergehenden Ansprüche,
**dadurch gekennzeichnet,**
**daß** die Separatoranordnung (7) und insbesondere der großporige Separator (7b) gegenüber Temperaturen bis 100 °C chemisch stabil ausgebildet ist.

14. Batterieanordnung nach einem der vorhergehenden Ansprüche,
**dadurch gekennzeichnet,**
**daß** die Separatoranordnung (7) und insbesondere der großporige Separator (7b) einen kleinen Wärmeausdehnungskoeffizienten im Betriebstemperaturbereich aufweisen.

15. Verwendung der Batterieanordnung nach einem der Ansprüche 1 bis 14 in einer wiederaufladbaren Metall/Luftsauerstoff-Batterie und insbesondere in einer Zink/Luftsauerstoff-Batterie.

## Claims

1. Rechargeable battery system
having a plurality of electrodes (2a, 2b) in an electrolyte space (3) filled with electrolyte (4) which are tapped with the aid of an electrical tap (5a, 5b),
in which at least one of the electrodes (2a, 2b) is constructed as an electrode (2a) of the second type and at least the electrode (2a) of the second type has a separator arrangement (7) surrounding the electrode (2a),
**characterized in that**
the separator arrangement (7) has at least one small-pored separator (7a) and at least one large-pored separator (7b).

2. Battery system according to claim 1,
**characterized in that**
at least the electrode (2a) of the second type is additionally provided with an electrochemically active coating (S) having a surface profile or relief with a plurality of depressions and/or elevations.

3. Battery system according to one of the preceding claims,
**characterized in that**
the electrode (2a) of the second type is constructed as an anode.

4. Battery system according to one of the preceding claims,
**characterized in that**
the electrode (2a) of the second type is constructed as a metal electrode and especially as a zinc electrode.

5. Battery system according to one of the preceding claims,
**characterized in that**
the small-pored separator (7a) is constructed for preventing the escape of discharge products of electrode (2a) from the separator arrangement (7) and/or preventing short-circuits particularly by dendrite formation during electrical recharging.

6. Battery system according to one of the preceding claims,
**characterized in that**
the large-pored separator (7b) is constructed for firmly surrounding the electrode (2a).

7. Battery system according to one of the preceding claims,
**characterized in that**
the large-pored separator (7b) has a mechanical stability, which especially counteracts a volume increase of electrode (2a) and a structural and/or shape change during discharging and/or charging of the battery system (1).

8. Battery system according to one of the preceding claims,
**characterized in that**
the large-pored separator (7b) has a plurality
of pores, openings or channels (9) for supplying and discharging electrolyte (4) to or from the electrode (2a).

9. Battery system according to claim 8,
**characterized in that**
the pores, openings or channels (9) have substantially the same shape and are roughly homogeneously distributed on the separator (7b).

10. Battery system according to one of the claims 8 or 9,
**characterized in that**
the pores, openings or channels (9) are arranged in honeycomb form on the separator (7b) and especially have a circular, rectangular or hexagonal cross-section.

11. Battery system according to one of the preceding claims,
**characterized in that**
the separator arrangement (7) and especially the large-pored separator (7b) are made from an electrically nonconductive material.

12. Battery system according to one of the preceding claims,
**characterized in that**
the separator arrangement (7) is chemically inert with respect to oxygen, concentrated lyes, such as KOH, acids, and/or optionally to added electrolyte additives, such as Pb, Hg, Cd, Ca, Sn or others.

13. Battery system according to one of the preceding claims,
**characterized in that**
the separator arrangement (7) and especially the large-pored separator (7b) is chemically stable with respect to temperatures up to 100°C.

14. Battery system according to one of the preceding claims,
**characterized in that**
the separator arrangement (7) and at least the large-pored separator (7b) has a low thermal expansion coefficient in the operating temperature range.

15. Use of the battery system according to one of the claims 1 to 14 in a rechargeable metal/air battery and especially in a zinc/air battery.

## Revendications

1. Système de batterie rechargeable avec une pluralité d'électrodes (2a, 2b) dans un compartiment à électrolyte (3) rempli d'électrolyte (4), électrodes qui sont prises à l'aide d'une prise électrique (5a, 5b),
au moins l'une des électrodes (2a, 2b) étant conformée en électrode (2a) de deuxième type et au moins l'électrode (2a) de deuxième type présentant un système séparateur (7) qui enserre l'électrode (2a),
***caractérisé en ce que*** le système séparateur (7) présente au moins un séparateur (7a) à pores fins et au moins un séparateur (7b) à pores grossiers.

2. Système de batterie selon la Revendication 1, ***caractérisé en ce qu***'au moins l'électrode (2a) de deuxième type présente en plus une couche (S) électrochimiquement active, munie d'un profil ou relief de surface avec une pluralité de renfoncements et/ou protubérances.

3. Système de batterie selon l'une quelconque des Revendications précédentes, ***caractérisé en ce que*** l'électrode (2a) de deuxième type est conformée en anode.

4. Système de batterie selon l'une quelconque des Revendications précédentes, ***caractérisé en ce que*** l'électrode (2a) de deuxième type est conformée en électrode métallique et en particulier en électrode au zinc.

5. Système de batterie selon l'une quelconque des Revendications précédentes, ***caractérisé en ce que*** le séparateur (7a) à pores fins est conformé pour supprimer la sortie de produits de décharge de l'électrode (2a) depuis le système séparateur (7) et/ou la formation de courts-circuits, en particulier par formation de dendrites pendant la recharge électrique.

6. Système de batterie selon l'une quelconque des Revendications précédentes, ***caractérisé en ce que*** le séparateur (7b) à pores grossiers est conformé pour enserrer solidement l'électrode (2a).

7. Système de batterie selon l'une quelconque des Revendications précédentes, ***caractérisé en ce que*** le séparateur (7b) à pores grossiers présente une stabilité mécanique qui s'oppose en particulier à une augmentation de volume de l'électrode (2a) et à une modification de structure et/ou de forme pendant la décharge et/ou la charge du système de batterie (1).

8. Système de batterie selon l'une quelconque des Revendications précédentes, ***caractérisé en ce que*** le séparateur (7b) à pores grossiers présente une pluralité de pores, ouvertures ou canaux (9) pour introduire et/ou extraire des électrolytes (4) dans ou hors de l'électrode (2a).

9. Système de batterie selon la Revendication 8, ***caractérisé en ce que*** les pores, ouvertures ou canaux (9) présentent pour l'essentiel la même forme et sont répartis approximativement de manière homogène sur le séparateur (7b).

10. Système de batterie selon la Revendication 8 ou 9, ***caractérisé en ce que*** les pores, ouvertures ou canaux (9) sont disposés en nid d'abeille sur le séparateur (7b) et présentent en particulier une section circulaire, rectangulaire ou hexagonale.

11. Système de batterie selon l'une quelconque des Revendications précédentes, ***caractérisé en ce que*** le système séparateur (7), et en particulier le séparateur (7b) à pores grossiers, sont constitués d'un matériau non conducteur électrique.

12. Système de batterie selon l'une quelconque des Revendications précédentes, ***caractérisé en ce que*** le système séparateur (7) est réalisé chimiquement inerte vis-à-vis de l'oxygène, des bases concentrées, en particulier KOH, des acides et/ou le cas échéant vis-à-vis des additifs ajoutés aux électrolytes, tels que Pb, Hg, Cd, Ca, Sn ou autres.

13. Système de batterie selon l'une quelconque des Revendications précédentes, ***caractérisé en ce que*** le système séparateur (7) et en particulier le séparateur (7b) à pores grossiers sont chimiquement stables vis-à-vis de températures pouvant atteindre 100°C.

14. Système de batterie selon l'une quelconque des revendications précédentes, **caractérisé en ce que** le système séparateur (7), et en particulier le séparateur (7b) à pores grossiers, présentent un faible coefficient de dilatation thermique dans la plage de températures de service.

15. Utilisation du système de batterie selon l'une quelconque des revendications 1 à 14 dans une batterie rechargeable métal/oxygène de l'air, et en particulier dans une batterie zinc/oxygène de l'air.
